# EUROPÄISCHE PATENTSCHRIFT

(11) **EP 3 987 225 B1**
(45) Veröffentlichungstag und Bekanntmachung des Hinweises auf die Patenterteilung: **15.10.2025**
(21) Anmeldenummer: 20803146.8
(22) Anmeldetag: 05.11.2020
(51) Int. Cl.: B60Q 3/14, B60K 35/10, B60K 35/22, B60K 35/50, B60K 35/60, F21V 8/00

(54) **FUNKTIONSANZEIGE ZUR SELEKTIVEN ANZEIGE VON SCHALTFUNKTIONEN UND/ODER SCHALTZUSTÄNDEN REPRÄSENTIERENDEN SYMBOLEN**
FUNCTION DISPLAY FOR SELECTIVELY DISPLAYING SYMBOLS WHICH REPRESENT SWITCH FUNCTIONS AND/OR SWITCH STATES
AFFICHEUR DE FONCTIONS DESTINÉ À AFFICHER SÉLECTIVEMENT DES SYMBOLES QUI REPRÉSENTENT DES FONCTIONS DE COMMUTATEURS ET/OU DES ÉTATS DE COMMUTATEURS

(30) Priorität: 14.09.2020 DE 102020123873
(43) Veröffentlichungstag der Anmeldung: 27.04.2022
(73) Patentinhaber: PREH GmbH, 97616 Bad Neustadt a.d. Saale (DE)
(72) Erfinder: DÜNNIGER, Johannes, 97723 Oberthulba / OT Wittershausen (DE); KRAMLICH, Andreas, 97616 Bad Neustadt a.d. Saale (DE)
(74) Vertreter: Lohmanns, Bernard
(86) Internationale Anmeldenummer: PCT/EP2020/081169
(87) Internationale Veröffentlichungsnummer: WO 2022/053169

(56) Entgegenhaltungen:
- WO-A1-98/52181
- US-A1- 2003 067 760
- US-A1- 2008 055 882
- US-A1- 2009 286 446

## Beschreibung

Die Erfindung betrifft eine Funktionsanzeige zur selektiven Anzeige von Schaltfunktionen und/oder Schaltzuständen repräsentierenden Symbolen. Diese Funktionsanzeigen werden beispielsweise bei einem multifunktionalen Bedienelement zur Visualisierung der mit dem Bedienelement verbundenen Schaltfunktionalitäten und/oder Schaltzuständen benötigt. Dazu werden regelmäßig elektronische Pixelmatrixanzeigen verwendet. Diese sind jedoch vergleichsweise teuer, schränken aufgrund ihrer meist rechteckigen Form die gestalterische Auslegung und Platzierung ein. Darüber hinaus weisen elektronische Pixelmatrixanzeigen bei der Darstellung statischer Anzeigeinhalte oft ein "Einbrennen" auf, d.h. der Anzeigeinhalt bleibt auch bei ausgeschalteter Anzeige durch optisch wahrnehmbare Schädigungen der bildgebenden Schichten der Anzeige dauerhaft und unerwünscht sichtbar. Darüber hinaus ist der Stromverbrauch derartiger elektronischen Pixelmatrixanzeigen vergleichsweise hoch. Bei gewissen Anwendungen verbietet sich zudem aufgrund der Verletzungsgefahr beispielsweise bei einem Kopfaufprall die Verwendung üblicher elektronischer Pixelmatrixanzeigen. US 2009/286446A1 offenbart ein Display, das eine Lichtleiterplatte und eine Lichtquelle umfasst, die an einer Kantenfläche der Lichtleiterplatte angebracht ist. Es wird ein Anzeigebereich aus punktförmigen Reflexionsstrukturen gebildet, der einen von der Lichtquelle emittierten Lichtstrahl auf eine Oberfläche reflektiert.

Vor diesem Hintergrund ist es die Aufgabe der vorliegenden Erfindung, eine Funktionsanzeige bereitzustellen, die den gestalterischen Spielraum vergrößert, preiswert herzustellen ist, energiesparend und zuverlässig ist und/oder das Verletzungsrisiko insbesondere bei einem Kopfaufschlag verringert. Diese Aufgabe wird durch eine Funktionsanzeige des Anspruchs 1 gelöst. Ein entsprechend vorteilhaftes Bedienelement sowie ein die Funktionsanzeige beinhaltendes Lenkrad sind jeweils Gegenstand der nebengeordneten Ansprüche. Vorteilhafte Ausgestaltungen sind Gegenstand der jeweils abhängigen Ansprüche.

Die Beschreibung, insbesondere im Zusammenhang mit den Figuren, charakterisiert und spezifiziert die Erfindung zusätzlich.

Die Erfindung betrifft eine Funktionsanzeige zur selektiven Anzeige von Schaltfunktionen und/oder Schaltzuständen repräsentierenden Symbolen, insbesondere für ein Kraftfahrzeug. Als selektive Anzeige wird die wahlweise Anzeige unterschiedlicher Symbole aus einer Anzahl von vorgegebenen Symbolen verstanden, was bei der vorliegenden Lösung durch selektive Auswahl und elektrische Bestromung einer oder mehrerer Lichtquellen aus einer Vielzahl von Lichtquellen erreicht wird. Die erfindungsgemäße Funktionsanzeige umfasst eine äußere, transparente oder transluzente Deckschicht, welche eine bei bestimmungsgemäßer Anordnung der Funktionsanzeige eine dem Betrachter zugewandte Anzeigefläche definiert. Beispielsweise handelt es sich um eine Schicht aus einem Kunststoff, bevorzugt Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) oder aus einem Glaswerkstoff.

Erfindungsgemäß umfasst die Funktionsanzeige ferner einen Lichtleiterstapel aus mindestens zwei, in einer Stapelrichtung überlagert angeordneten, transparenten oder transluzenten, flächigen Lichtleitern. Die Lichtleiter sind durch eine oder mehrere transparente oder transluzente Schichten aus einem im Vergleich zu dem Material der benachbarten Lichtleiter optisch dünneren Material voneinander separiert. Anders ausgedrückt, ist zwischen zwei Lichtleitern eine im Vergleich zu den Lichtleitern optisch dünnere Schicht oder ein Schichtaufbau aus mehreren im Vergleich zu den Lichtleitern optisch dünneren Schichten vorgesehen, um den Grenzwinkel für die Totalreflexion innerhalb des benachbarten Lichtleiters zu vergrößern. Die Lichtleiter weisen bei bestimmungsgemäßer Anordnung der Funktionsanzeige jeweils mindestens eine einem Betrachter zugewandte Hauptfläche auf, während bei wenigstens einem Lichtleiter die dem Betrachter abgewandte Hauptfläche einem in der Stapelrichtung nächstbenachbarten Lichtleiter zugewandt ist. Die vorgenannte Deckschicht ist in einer Ausgestaltung ein Lichtleiter des Lichtleiterstapels, bevorzugt ist die Deckschicht zusätzlich zu dem Lichtleiterstapel vorgesehen.

Die Lichtleiter weisen beispielsweise zwei gegenüberliegende, bevorzugt parallel zueinander verlaufende Hauptflächen auf, die über Stirnflächen, die mit den Hauptflächen des Lichtleiters gemeinsame Kanten ausbilden, beispielsweise an den Schmalseiten und an den Längsseiten des Lichtleiters, verbunden sind. Beispielsweise sind die Stirnflächen orthogonal zu wenigstens einer Hauptfläche oder beiden Hauptflächen des Lichtleiters.

Erfindungsgemäß ist pro Lichtleiter mindestens eine Lichtquelle vorgesehen, die angeordnet ist, Licht über eine Stirnfläche des zugehörigen Lichtleiters in den jeweiligen Lichtleiter einzukoppeln. Bei der Lichtquelle handelt es sich beispielsweise um eine Leuchtdiode, insbesondere um eine solche in SMD-Bauweise. Beispielsweise sind die Stirnflächen des Lichtleiters an dessen Längsseite so antiparallel zueinander orientiert, dass sich der Querschnitt des Lichtleiters mit zunehmender Entfernung von der Lichtquelle vergrößert.

Erfindungsgemäß ist ferner pro Lichtleiter eine im oder auf dem Lichtleiter vorgesehene lichtbrechende und/oder lichtstreuende Mikrostrukturierung vorgesehen, welche ausgebildet ist, bei aktivierter Lichtquelle ein hinterleuchtetes Symbol für den Betrachter sichtbar jeweils mittels des in den Lichtleiter eingekoppelten Lichtes anzuzeigen. Die Mikrostrukturierung bewirkt durch Lichtbrechung und/oder Lichtstreuung ein Lichtaustritt in Richtung des Betrachters. Beispielsweise wird durch die Mikrostruktur ein Einfallswinkel des Lichtes auf die dem Betrachter zugewandte Hauptfläche erreicht, der nicht die Totalreflexionsbedingung der Hauptfläche als Grenzfläche erfüllt.

Durch selektives Aktivieren der Lichtquellen können vergleichsweise einfach unterschiedliche Schaltzustände oder Schaltfunktionen visualisiert werden. Die Funktionsanzeige ist einfach und kostengünstig zu realisieren und gibt dem Gestalter ein großes Maß an Gestaltungsspielraum, was auch die Platzierung der Funktionsanzeige betrifft. Die Funktionsanzeige zeigt so gut wie keine durch die Lichtabstrahlung bewirkte Alterungserscheinung und ist vergleichsweise energiesparend. Die Mikrostrukturierung gibt beispielsweise das Symbol positiv als Bild, als dessen inverse Darstellung oder als dessen Umriss wieder.

Bevorzugt wird die Mikrostrukturierung aus mehreren, gleichförmig ausgebildeten Mikrostrukturen ausgebildet, deren senkrechte Projektion auf die Anzeigefläche einen mikrostrukturierten Bereich für jeden Lichtleiter definiert. Bevorzugt beträgt die Anzahldichte der Mikrostrukturen im mikrostrukturierten Bereich 1.000 bis 2.000 pro mm².

Bevorzugt weisen die Mikrostrukturen jeweils einen Durchmesser auf, der im Bereich von 1 bis 25 µm liegt.

Gemäß einer bevorzugten Ausgestaltung ist die wenigstens eine transparente oder transluzente, zwischen den Lichtleitern angeordnete Schicht aus dem im Vergleich zu den nächstbenachbarten Lichtleitern optisch dünneren Material ein Luftspalt, um den Grenzwinkel für die Totalreflexion innerhalb des Lichtleiters zu vergrößern. Anders ausgedrückt, besteht die Schicht aus Luft.

Gemäß einer weiteren Ausgestaltung ist die wenigstens eine transparente oder transluzente, zwischen den Lichtleitern angeordnete Schicht aus dem im Vergleich zu den nächstbenachbarten Lichtleitern optisch dünneren Material eine Klebstoffschicht. Beispielsweise handelt es sich um einen bei der Aufbringung noch flüssigen Klebstoff oder um eine in Folienform aufbringbare Klebstoffschicht, der bzw. die nachfolgend gehärtet wird. Beispielsweise weist die resultierende Klebstoffschicht einen Brechungsindex von weniger als 1,5 auf. Beispielsweise handelt es sich um einen Klebstoff auf Acrylat- oder Silikonbasis. Beispielsweise handelt es sich um einen mittels Wärme, UV-Strahlung oder durch Feuchtigkeit einwirkenden Klebstoff. Bevorzugt weist die Klebstoffschicht eine Abzugskraft nach Norm DIN-EN-28510-1 von mehr als 800 g/cm auf. Die Verwendung einer Klebstoffschicht führt neben seiner die Totalreflexion verbessernden Wirkung zu einer Stabilisierung des Aufbaus und ermöglicht die Verwendung und Ausbildung von nicht ebenen Lichtleitern. Die Klebstoffschicht kann vollflächig zwischen den Lichtleitern ausgebildet sein oder beide Lichtleiter nur bereichsweise bedecken. Die Klebstoffschicht kann so linienartige oder punktartige Ausbreitungsflächen zwischen den Lichtleitern ausbilden.

Gemäß einer Ausgestaltung wird die wenigstens eine transparente oder transluzente, zwischen den Lichtleitern angeordnete Schicht aus dem im Vergleich zu den nächstbenachbarten Lichtleitern optisch dünneren Material durch eine Beschichtung der Lichtleiter ausgebildet, um den Grenzwinkel für die Totalreflexion innerhalb des Lichtleiters zu vergrößern. Beispielsweise weisen solche Beschichtung einen Brechungsindex von weniger als 1,5, bevorzugt weniger als 1,4 auf. Beispielsweise liegt der Brechungsindex im Bereich von 1,30 bis 1,39. Derartige Beschichtung sind kommerziell erhältlich bei der myPolymers Ltd. Mit Sitz in 3 Golda Meir St., Ness Ziona, Israel.

Zwischen zwei Lichtleitern ist in einer Ausgestaltung auch ein Schichtaufbau aus mehreren, der zuvor beschriebenen Schichten vorgesehen. Beispielsweise sind die Lichtleiter auf ihren zugewandten Flächen mit dem optisch dünneren Material beschichtet und die durch die Beschichtung ausgebildeten Schichten sind durch eine zusätzliche Klebeschicht aus einem im Vergleich zum Material der Lichtleiter optisch dünneren Klebstoff verbunden.

Die Mikrostrukturierung kann durch Laserablation in den Lichtleiter eingebracht werden, beispielsweise dreidimensional durch Vitrographie, auch als Lasserinnengravur bezeichnet, oder auf einer dessen Hauptflächen aufgebracht werden. Bevorzugt ist die Mikrostrukturierung durch Prägen einer der Hauptflächen pro Lichtleiter ausgebildet, wodurch die Funktionsanzeige kostengünstig zu realisieren ist.

Um Bauhöhe einzusparen sind zwei unmittelbar benachbarte Lichtleiter vorgesehen, deren Mikrostrukturierung jeweils ausschließlich auf den sich zugewandten Hauptflächen vorgesehen ist.

Bevorzugt macht bei senkrechter Projektion der mikrostrukturierten Bereich jedes Lichtleiters auf die Anzeigefläche der Flächenanteil aller mikrostrukturierten Bereiche weniger als die Hälfte der Anzeigefläche, bevorzugter weniger als ein Drittel der Anzeigefläche, aus. Dadurch kann der verbleibende Teil für andere Zwecke, beispielsweise als Ambientebeleuchtung genutzt werden. Bevorzugt sind alle Lichtleiter außerhalb des mikrostrukturierten Bereichs transparent, so dass ein großer Teil der Anzeigefläche transparent verbleibt und beispielsweise die Durchsicht durch die Funktionsanzeige gewährleistet ist, um dem Betrachter die Möglichkeit zu geben, durch die Funktionsanzeige hindurch andere Anzeigen, Instrumente oder den Straßenverlauf zu verfolgen. Dadurch ist beispielsweise die Platzierung der Funktionsanzeige an einem Lenkrad, beispielsweise im Bereich zwischen Lenkradnabe und Lenkradkranz möglich, ohne die Sicht auf das Armaturenbrett zu beeinträchtigen.

Gemäß der beanspruchten Erfindung überlappen bei senkrechter Projektion der mikrostrukturierten Bereiche aller Lichtleiter auf die Anzeigefläche, die projizierten Flächenanteile der einzelnen Lichtleiter nicht. Noch bevorzugter sind die projizierten Flächenanteile beabstandet zueinander angeordnet. Dadurch wird einerseits die Erkennbarkeit der Symbole verbessert, andererseits kann eine hohe Lichtdurchlässigkeit bzw. Transparenz über die gesamte Anzeigefläche erreicht werden.

Bei einer weiteren bevorzugten Ausführungsform grenzen bei senkrechter Projektion der mikrostrukturierten Bereiche von wenigstens zwei der Lichtleiter des Lichtleiterstapels auf die Anzeigefläche die projizierten Flächenanteile aneinander an, um eine minimale Flächenausdehnung der Anzeigefläche zu erreichen. Noch bevorzugter überlappen die projizierten Flächenanteile und die zugehörigen Lichtquellen unterscheiden sich in der Lichtfarbe, wodurch mehrfarbige Symbole angezeigt werden können.

Um Bauraum einzusparen und die Verletzungsgefahr zu minimieren, werden bevorzugt die Lichtleiter jeweils durch eine Folie, beispielsweise eine Kunststofffolie, wie eine PC-Folie oder PE-Folie, ausgebildet.

Zur Verbesserung der Lichteinkopplung und/oder zur Anpassung der Lichtabstrahlungscharakteristik der Lichtquelle an die für den Lichteintritt in den Lichtleiter bestimmten Stirnfläche ist gemäß einer bevorzugten Ausgestaltung zwischen dem Lichtleiter und der Lichtquelle eine Linse und/oder eine Blende angeordnet. Die Blende ist beispielsweise ferner ausgebildet, den Lichtübertritt zu weiteren Lichtleitern neben dem zugeordneten Lichtleiter zu unterbinden.

Bevorzugt ist vorgesehen, dass der Lichtleiter im jeweiligen Lichtverlauf von der Lichtquelle zu dem zugehörigen Symbol jeweils mindestens eine gekrümmte Grenzfläche aufweist, um mindestens ein fokussierendes Linsenelement auszubilden. Beispielsweise bildet der Lichtleiter an seiner Stirnfläche eine für die Licht der Lichtquelle vorgesehene gekrümmte Lichteintrittsfläche aus. In einer anderen Ausgestaltung weist der Lichtleiter einen oder mehrere Durchbrüche auf, die jeweils eine als Lichtaustritts- und eine Lichteintrittsfläche fungierende Grenzfläche aufweisen, von denen mindestens eine optisch fokussierend wirkend gekrümmt ist, bevorzugt beide optisch fokussierend wirkend gekrümmt sind.

Die Erfindung betrifft ferner eine Anordnung aus mehreren Funktionsanzeigen, die jeweils in einer der zuvor beschriebenen Ausführungsformen ausgebildet sind. Die Anordnung zeichnet sich durch mehrere, aus Sicht des Betrachters nebeneinander angeordnete Anzeigeflächen aus. Bei der Anordnung ist zumindest die Deckschicht und/oder zumindest ein Lichtleiter einstückig ausgebildet, um so beispielsweise eine gemeinsame Deckschicht bzw. einen gemeinsamen Lichtleiter auszubilden. Um ein Übersprechen des Lichtes von einem Lichtleiter der einen Funktionsanzeige in den Lichtleiter der anderen Funktionsanzeige der Anordnung trotz der Einstückigkeit zu unterbinden, sind beispielsweise Durchbrüche vorgesehen, die mit bezogen auf das Material des Lichtleiters optisch dünnerem Material, wie beispielsweise Luft, ausgefüllt sind.

Die Erfindung betrifft ferner ein Bedienelement, welches die Funktionsanzeige in einer der zuvor beschriebenen Ausführungsformen aufweist. Das Bedienelement weist beispielsweise einen Fuß zur Festlegung des Bedienelements an einer Fahrzeugkomponente, wie an einem Armaturenbrett, an einer Verkleidung einer Fahrgastzelle oder insbesondere an einem Lenkrad eines Kraftfahrzeugs, auf. Das erfindungsgemäße Bedienelement weist beispielsweise ferner ein eine Bedienfläche definierendes Bedienteil auf, das als mindestens ein freitragender Hebelarm ausgebildet ist. Der freitragende Hebelarm ist beispielsweise einseitig mittels eines Festkörpergelenks am Fuß gelagert, um bei Einwirken einer senkrecht auf die Bedienfläche einwirkenden Bedienkraft ein Verschwenken des Bedienteils um eine gedachte Schwenkachse entgegen einer Rückstellkraft relativ zum Fuß zu ermöglichen. Beispielsweise sind ferner Mittel vorgesehen, um ein Verschwenkmaß zwischen Bedienteil und Fuß zu detektieren. Als Festkörpergelenk bezeichnet man allgemein einen Bereich eines Bauteils, welcher ein Verschwenken zwischen zwei Starrkörperbereichen durch Biegung erlaubt. Durch das Festkörpergelenk wird eine spielfreie und damit klapperfreie Lagerung des Bedienteils am Fuß erreicht. Beispielsweise werden Fuß und Bedienteil aus einem Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) ausgebildet. Das erfindungsgemäße Bedienelement eignet sich insbesondere für solche Ausgestaltungen, bei denen das maximale Verschwenkmaß um die gedachte Schwenkachse aus der unbetätigten Ruhestellung in die betätigte maximale Schwenkstellung weniger als 10°, bevorzugt weniger als 5° beträgt.

Bevorzugt ist die Anzeigefläche ein transluzenter oder transparenter Bereich einer Bedienfläche eines für eine Berührung oder eine Betätigung bestimmten Bedienteils des Bedienelements.

Die Erfindung betrifft ferner ein Lenkrad, beispielsweise mit einer Lenkradnabe, wenigstens einer Lenkradspeiche und mit einem durch die Lenkradspeiche getragenen Lenkradkranz. Das erfindungsgemäße Lenkrad weist ferner eine Funktionsanzeige in einer der zuvor beschriebenen Ausführungsformen auf. Bevorzugt ist die Funktionsanzeige Bestandteil eines am Lenkrad befestigten Bedienelements. Beispielsweise ist der Fuß des Bedienelements drehfest am Lenkradkranz festgelegt. Bevorzugt ist die Anzeigefläche der Funktionsanzeige zwischen dem Lenkradkranz und der Lenkradnabe bzw. einem die Lenkradnabe bedeckenden Pralltopf des Lenkrades angeordnet.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Figur 1: eine schematische Schnittansicht einer ersten erfindungsgemäßen Ausführungsform einer Funktionsanzeige 1;
- Figur 2: eine schematische Schnittansicht einer erfindungsgemäßen Ausführungsform eines Bedienelements 10 mit einer Funktionsanzeige;
- Figur 3: eine Aufsicht eines erfindungsgemäßen Lenkrads mit einem eine Funktionsanzeige 1 beinhaltenden Bedienelements 10;
- Figur 4: eine schematische Schnittansicht einer zweiten erfindungsgemäßen Ausführungsform einer Funktionsanzeige 1;
- Figur 5: eine schematische Schnittansicht einer dritten erfindungsgemäßen Ausführungsform einer Funktionsanzeige 1;
- Figur 6: eine horizontale Schnittansicht einer erfindungsgemäßen Anordnung aus zwei Funktionsanzeigen 1, 1';
- Figur 7: eine horizontale Schnittansicht einer weiteren erfindungsgemäßen Anordnung aus zwei Funktionsanzeigen 1, 1'.

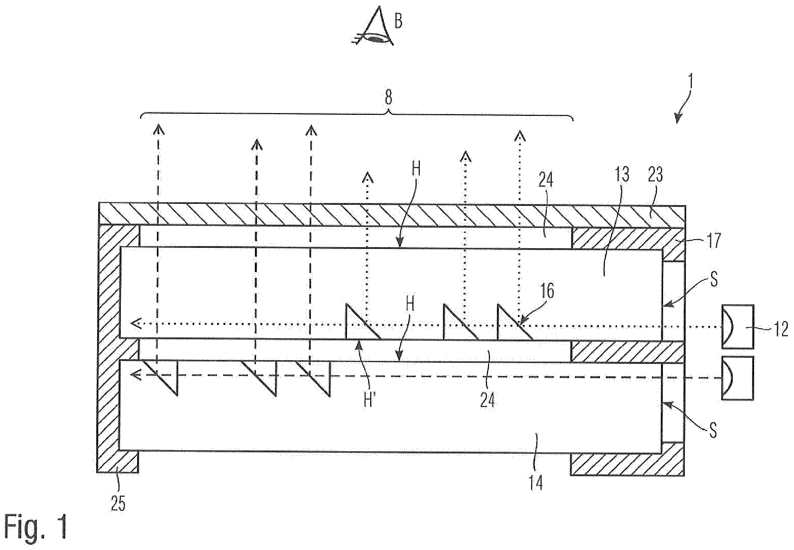

Figur 1 zeigt schematisch eine erste erfindungsgemäße Ausführungsform der Funktionsanzeige 1. Die erfindungsgemäße Funktionsanzeige 1 umfasst eine äußere, transparente oder transluzente Deckschicht 23, welche eine bei bestimmungsgemäßer Anordnung der Funktionsanzeige 1 eine dem Betrachter B zugewandte Anzeigefläche 8 definiert, Beispielsweise handelt es sich um eine Schicht aus einem Kunststoff, bevorzugt Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) oder aus einem Glaswerkstoff. Die Deckschicht 23 kann auch Teil eines Schichtaufbaus aus mehreren Schichten sein. Erfindungsgemäß umfasst die Funktionsanzeige 1 ferner einen Lichtleiterstapel aus mindestens zwei, überlagert angeordneten, transparenten oder transluzenten, flächigen, jeweils aus einer thermoplastischen Kunststofffolie ausgebildeten Lichtleitern 13, 14. Die Lichtleiter 13, 14 sind durch einen zwischen den Lichtleitern 13, 14 vorgesehene Schicht 24, hier einem Luftspalt, aus einem Material, hier Luft, mit einem Brechungsindex, der niedriger ist als das der benachbarten Lichtleiter 13, 14, separiert. Diese Schicht 24 aus Luft ist ebenfalls zwischen der Deckschicht 23 und dem nächstbenachbarten Lichtleiter 13 vorgesehen, Die Lichtleiter 13, 14 bilden jeweils mindestens eine dem Betrachter B zugewandte Hauptfläche H aus, während der obere, dem Betrachter B nähere Lichtleiter 13 eine dem Betrachter abgewandte Hauptfläche H' aufweist, die dem in Stapelrichtung nächstbenachbarten Lichtleiter 14 zugewandt ist. Den Lichtleitern 13, 14 ist jeweils eine Lichtquelle 12, nämlich eine Leuchtdiode in SMD-Bauweise, zugeordnet, die so angeordnet sind, dass das von ihnen erzeugte Licht über eine bezüglich der Stapelrichtung seitliche Stirnfläche S in den zugeordneten Lichtleiter 13, 14 eingekoppelt wird. Um dabei jeweils unerwünschten Lichtstreuung oder Lichtabstrahlung in die benachbarten Lichtleiter 13, 14 zu vermeiden, ist eine Blende 17 vorgesehen. An der gegenüberliegenden Stirnfläche ist eine reflexionsmindernde Beschichtung 25 auf den Stirnflächen der Lichtleiter 13, 14 aufgebracht, um Rückreflexionen in den jeweiligen Lichtleiter 13, 14 zu minimieren. In wenigstens einer der Hauptflächen der Lichtleiter 13, 14 ist eine durch mehrere Mikrostrukturen 16 ausgebildete Mikrostrukturierung durch Prägen eingebracht, die dafür sorgt, dass Licht in Richtung des Betrachters B aus dem jeweiligen Lichtleiter 13, 14 ausgekoppelt wird. Die Mikrostruktururen 16 sind in Form eines Symbols aufgebracht, welches bei entsprechender Aktivierung der zugehörigen Lichtquelle 12 für den Betrachter B sichtbar wird. Die Mikrostrukturen 16 sind jeweils gleichförmig ausgebildet und weisen einen Durchmesser auf, der im Bereich von 1 bis 25 µm liegt. Um Bauhöhe einzusparen sind bei den zwei unmittelbar benachbarten Lichtleitern 13, 14 die Mikrostrukturen 16 in den sich zugewandten Hauptflächen H, H' vorgesehen und jeweils durch Prägen eingebracht worden.

Alle Lichtleiter 13, 14 sind außerhalb des mikrostrukturierten Bereichs transparent, so dass ein großer Teil der Anzeigefläche 8 transparent verbleibt und beispielsweise die Durchsicht durch die Funktionsanzeige gewährleistet ist, um dem Betrachter B die Möglichkeit zu geben, durch die Funktionsanzeige hindurch andere Anzeigen oder den Straßenverlauf zu verfolgen. Dadurch ist beispielsweise die Platzierung der Funktionsanzeige 1 an einem Lenkrad, beispielsweise im Bereich zwischen Lenkradnabe und Lenkradkranz möglich, ohne die Sicht auf das Armaturenbrett zu beeinträchtigen. Bei senkrechter Projektion der mikrostrukturierten Bereiche aller Lichtleiter 13, 14 auf die Anzeigefläche 8 überlappen die projizierten und mikrostrukturierten Flächenanteile der einzelnen Lichtleiter 13, 14 nicht, um die Darstellungsqualität der Symbole nicht zu beeinträchtigen.

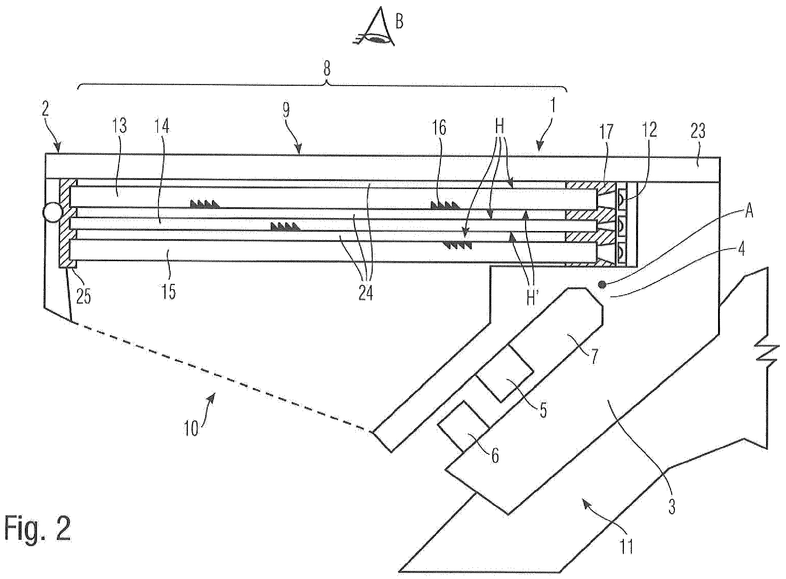

Figur 2 zeigt eine Ausführungsform des erfindungsgemäßen Bedienelements 1. Dieses weist einen Fuß 3 zur Festlegung des Bedienelements 1 an einer Fahrzeugkomponente, wie an einem Armaturenbrett, an einer Verkleidung einer Fahrgastzelle oder insbesondere an einem Lenkradkranz 11 eines Kraftfahrzeuglenkrads auf. Das erfindungsgemäße Bedienelement 10 weist ferner ein eine Bedienfläche 9 definierendes Bedienteil 2 auf, das als mindestens ein freitragender Hebelarm ausgebildet ist. Der freitragende Hebelarm ist jeweils einseitig mittels eines Festkörpergelenks 4 am Fuß 3 gelagert, um bei Einwirken einer senkrecht auf die Bedienfläche 9 einwirkenden Betätigungskraft ein Verschwenken des Bedienteils 2 um eine gedachte Schwenkachse A entgegen einer Rückstellkraft relativ zum Fuß 3 zu ermöglichen. Die Rückstellkraft ergibt sich beispielsweise aus der Verformung des Festkörpergelenks 4.

Erfindungsgemäß sind ferner Mittel 6 vorgesehen, um ein Verschwenkmaß zwischen Bedienteil 2 und Fuß 3 zu detektieren. Das Festkörpergelenk 4 ist lediglich durch eine einstückige Verbindung zwischen dem Fuß 3 und dem Bedienteil 2 ausgebildet. Das erfindungsgemäße Bedienelement 1 eignet sich insbesondere für solche Ausgestaltungen, bei denen das maximale Verschwenkmaß um die gedachte Schwenkachse A aus der in Figur 2 gezeigten unbetätigten Ruhestellung in eine maximal mögliche, betätigte Schwenkstellung weniger als 10°, bevorzugt weniger als 5° beträgt.

Erfindungsgemäß ist ferner ein durch eine nicht dargestellte Ansteuerelektronik mit einem elektrischen Ansteuersignal beaufschlagbarer Aktuator 5 zur Erzeugung eines aktiven haptischen Feedbacks, auch haptisch wahrnehmbare Ausgabe genannt, vorgesehen, wobei der Aktuator 5 bevorzugt ausschließlich am Bedienteil 2 festgelegt ist. Bevorzugt handelt es sich bei dem Aktuator 5 um einen auf Trägheit beruhenden, motorbasierten Aktuator, wie einen Motor auf dessen rotierender Antriebswelle eine bezüglich ihres Schwerpunkts exzentrisch montierte Masse festgelegt ist oder einen Magnetspulen-Aktuator oder einen piezoelektrischen Aktuator oder einen linearen Breitbandaktuator, wie einen Tauchspulenaktuator (englische Bezeichnung; Voice-Coil-Actuator) oder einen linearen Resonanzaktuator. Bevorzugt ist der Aktuator 5 durch kraft- oder stoffschlüssige Verbindung am Bedienteil 2 festgelegt, beispielsweise durch Verschrauben oder Verkleben. Durch die ausschließliche Festlegung am Bedienteil 2 wird eine Körperschalleinkopplung in den Lenkradkranz 11 und damit in die Fahrzeugkomponente unterbunden oder zumindest minimiert.

Die das Verschwenkmaß detektierenden Mittel 6 sind ausgebildet, eine Relativbewegung, bevorzugt eine Annäherung, zwischen dem Fuß 3 und dem Bedienteil 2 kapazitiv, optisch und/oder induktiv zu detektieren. Aufgrund der durch das Festkörpergelenk 4 realisierten spielfreien Lagerung des Bedienteils 2 in Zusammenwirken mit den das Verschwenkmaß, bevorzugt berührungslos, detektierenden Mittel 6 ergibt sich eine hysteresearme bis hystereselose Detektion der Betätigungskraft, die beispielsweise vorgesehen ist, eine Schalt- oder Steuerfunktion oder zumindest die Ausgabe einer optischen, akustischen oder einer haptisch wahrnehmbaren Ausgabe zu triggern.

Die Bedienfläche 9 umfasst eine Anzeigefläche 8, die von einer transparenten Deckschicht 23 einer Funktionsanzeige 1 bereitgestellt wird. Die Funktionsanzeige 1 ist weitgehend transparent ausgebildet, um die ungehinderte Sicht des Betrachters bzw. Bedieners durch die Funktionsanzeige 1 auf das dahinterliegende Bedienfeld, wie die Instrumente eines Armaturenbretts zu gewährleisten. Erfindungsgemäß umfasst die Funktionsanzeige 1 ferner einen Lichtleiterstapel aus drei, überlagert angeordneten, transparenten oder transluzenten, flächigen, jeweils aus einer thermoplastischen Kunststofffolie ausgebildeten Lichtleitern 13, 14, 15. Die Lichtleiter 13, 14, 15 sind jeweils durch einen zwischen den Lichtleitern 13, 14, 15 vorgesehene Schicht 24 aus Luft, welche somit jeweils einen Luftspalt zwischen zwei benachbarten der Lichtleiter 13, 14, 15 ausbildet, separiert. Diese Schicht 24 aus Luft ist ebenfalls zwischen der Deckschicht 23 und dem nächstbenachbarten Lichtleiter 13 vorgesehen.

Die Lichtleiter 13, 14, 15 bilden jeweils mindestens eine dem Betrachter zugewandte Hauptfläche H aus, während die beiden oberen, dem Betrachter B näheren Lichtleiter 13, 14 jeweils eine dem Betrachter abgewandte Hauptfläche H' aufweisen, die dem in Stapelrichtung nächstbenachbarten Lichtleiter 14 bzw. 15 zugewandt ist. Den Lichtleitern 13, 14, 15 ist jeweils eine Lichtquelle 12, nämlich eine Leuchtdiode in SMD-Bauweise, zugeordnet, die so angeordnet sind, dass das von ihnen erzeugte Licht über eine bezüglich der Stapelrichtung seitliche Stirnfläche in den zugeordneten Lichtleiter 13, 14, 15 eingekoppelt wird. Um dabei jeweils unerwünschten Lichtstreuung oder Lichtabstrahlung in die benachbarten Lichtleiter 13, 14, 15 zu vermeiden, ist eine Blende 17 vorgesehen. An der gegenüberliegenden Stirnfläche 25 ist eine reflexionsmindernde Beschichtung 25 auf den Stirnflächen der Lichtleiter 13, 14, 15 aufgebracht, um Rückreflexionen in den jeweiligen Lichtleiter 13, 14, 15 zu minimieren. In wenigstens einer der Hauptflächen der Lichtleiter 13, 14 ist eine durch mehrere Mikrostrukturen 16 ausgebildete Mikrostrukturierung durch Prägen eingebracht, die dafür sorgt, dass Licht in Richtung des Betrachters B aus dem jeweiligen Lichtleiter 13, 14 ausgekoppelt wird. Die Mikrostrukturen 16 sind in Form eines Symbols aufgebracht, welches bei entsprechender Aktivierung der zugehörigen Lichtquelle 12 für den Betrachter B sichtbar wird. Die Mikrostrukturen 16 sind jeweils gleichförmig ausgebildet und weisen einen Durchmesser auf, der im Bereich von 1 bis 25 µm liegt. Um Bauhöhe einzusparen sind bei zwei unmittelbar benachbarten Lichtleitern 14, 15 die Mikrostrukturen 16 in den sich zugewandten Hauptflächen H, H' vorgesehen und jeweils durch Prägen eingebracht worden.

Alle Lichtleiter 13, 14, 15 sind außerhalb des mikrostrukturierten Bereichs transparent, so dass ein großer Teil der Anzeigefläche 8 transparent verbleibt und beispielsweise die Durchsicht durch die Funktionsanzeige gewährleistet ist, um dem Betrachter B die Möglichkeit zu geben, durch die Funktionsanzeige hindurch andere Anzeigen oder den Straßenverlauf zu verfolgen. Dadurch ist beispielsweise die Platzierung der Funktionsanzeige 1 an einem Lenkrad, beispielsweise im Bereich zwischen Lenkradnabe und Lenkradkranz möglich, ohne die Sicht auf das Armaturenbrett zu beeinträchtigen. Bei senkrechter Projektion der mikrostrukturierten Bereiche aller Lichtleiter 13, 14, 15 auf die Anzeigefläche 8 überlappen die projizierten und mikrostrukturierten Flächenanteile der einzelnen Lichtleiter 13, 14 teilweise, um durch Verwendung von Lichtquellen 12 mit unterschiedlicher Farbigkeit der Lichtabstrahlung mehrfarbige Symbole zu erzeugen, dir durch zeitgleiche Durchleuchtung mehrerer Lichtleiter 14, 15 sichtbar gemacht werden.

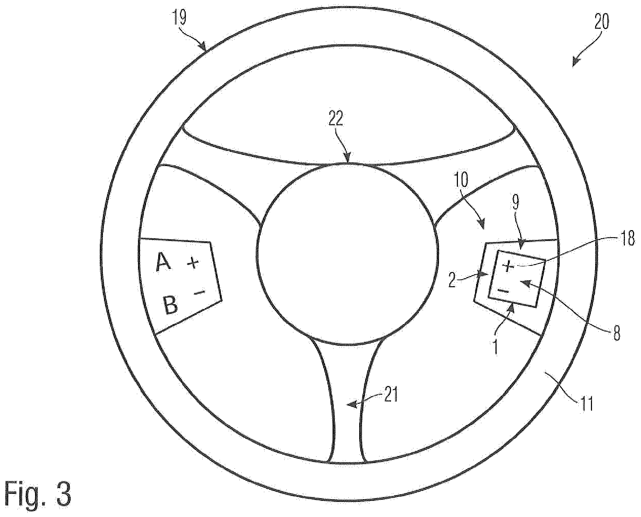

Die Erfindung betrifft ferner, wie in Figur 3 gezeigt, ein Lenkrad 20. Das Lenkrad 20 weist einen eine Lenkradnabe bedeckenden Pralltopf 22, wenigstens eine Lenkradspeiche 21 und einen durch die Lenkradspeiche 21 getragenen Lenkradkranz 11 auf. Das erfindungsgemäße Lenkrad 20 weist ferner eine Funktionsanzeige 1 auf, die Bestandteil eines am Lenkrad 20 befestigten Bedienelements 10 ist und in das Bedienteil 2 integriert ist, welches schwenkbeweglich an einem Fuß des Bedienelements 10 gelagert ist. Dabei ist der Fuß des Bedienelements 10 drehfest am Lenkradkranz 11 festgelegt. Die weitgehend transparente Anzeigefläche 8 der Funktionsanzeige 1 ist zwischen dem Lenkradkranz 11 und der Lenkradnabe bzw. dem die Lenkradnabe bedeckenden Pralltopf 22 des Lenkrades 20 angeordnet. Bei selektiver Aktivierung der zur Funktionsanzeige 1 gehörenden Lichtquellen werden in Abhängigkeit dieser Selektion unterschiedliche Symbole 18 im Bereich der Anzeigefläche 8 für den Betrachter, d.h. Fahrer, sichtbar, während durch die Transparenz der Funktionsanzeige 1 im verbleibenden Bereich das für den Fahrer hinter dem Lenkrad 20 liegende Armaturenbrett bzw. dessen Instrumentierung sichtbar ist.

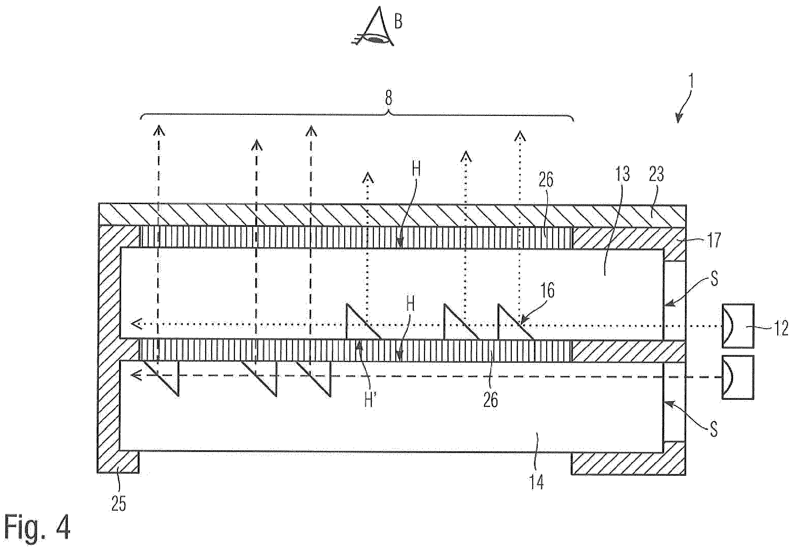

Figur 4 zeigt schematisch eine zweite erfindungsgemäße Ausführungsform der Funktionsanzeige 1. Die erfindungsgemäße Funktionsanzeige 1 umfasst eine äußere, transparente oder transluzente Deckschicht 23, welche eine bei bestimmungsgemäßer Anordnung der Funktionsanzeige 1 eine dem Betrachter B zugewandte Anzeigefläche 8 definiert. Beispielsweise handelt es sich um eine Schicht aus einem Kunststoff, bevorzugt Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) oder aus einem Glaswerkstoff. Die Deckschicht 23 kann auch Teil eines Schichtaufbaus aus mehreren Schichten sein. Erfindungsgemäß umfasst die Funktionsanzeige 1 ferner einen Lichtleiterstapel aus mindestens zwei, überlagert angeordneten, transparenten oder transluzenten, flächigen, jeweils aus einer thermoplastischen Kunststofffolie ausgebildeten Lichtleitern 13, 14. Die Lichtleiter 13, 14 sind durch einen zwischen den Lichtleitern 13, 14 vorgesehene Schicht 26 aus einem transparenten Klebstoff, beispielsweise einem vor dem Härten fließfähigen oder flüssigen Klebstoff, mit einem Brechungsindex, der niedriger ist als das der benachbarten Lichtleiter 13, 14, separiert. Diese Schicht 24 aus transparentem Klebstoff ist ebenfalls zwischen der Deckschicht 23 und dem nächstbenachbarten Lichtleiter 13 vorgesehen. Die Lichtleiter 13, 14 bilden jeweils mindestens eine dem Betrachter B zugewandte Hauptfläche H aus, während der obere, dem Betrachter B nähere Lichtleiter 13 eine dem Betrachter abgewandte Hauptfläche H' aufweist, die dem in Stapelrichtung nächstbenachbarten Lichtleiter 14 zugewandt ist. Den Lichtleitern 13, 14 ist jeweils eine Lichtquelle 12, nämlich eine Leuchtdiode in SMD-Bauweise, zugeordnet, die so angeordnet sind, dass das von ihnen erzeugte Licht über eine bezüglich der Stapelrichtung seitliche Stirnfläche S in den zugeordneten Lichtleiter 13, 14 eingekoppelt wird. Um dabei jeweils unerwünschten Lichtstreuung oder Lichtabstrahlung in die benachbarten Lichtleiter 13, 14 zu vermeiden, ist eine Blende 17 vorgesehen. An der gegenüberliegenden Stirnfläche ist eine reflexionsmindernde Beschichtung 25 auf den Stirnflächen der Lichtleiter 13, 14 aufgebracht, um Rückreflexionen in den jeweiligen Lichtleiter 13, 14 zu minimieren. In wenigstens einer der Hauptflächen der Lichtleiter 13, 14 ist eine durch mehrere Mikrostrukturen 16 ausgebildete Mikrostrukturierung durch Prägen eingebracht, die dafür sorgt, dass Licht in Richtung des Betrachters B aus dem jeweiligen Lichtleiter 13, 14 ausgekoppelt wird. Die Mikrostruktururen 16 sind in Form eines Symbols aufgebracht, welches bei entsprechender Aktivierung der zugehörigen Lichtquelle 12 für den Betrachter B sichtbar wird. Die Mikrostrukturen 16 sind jeweils gleichförmig ausgebildet und weisen einen Durchmesser auf, der im Bereich von 1 bis 25 µm liegt. Um Bauhöhe einzusparen sind bei den zwei unmittelbar benachbarten Lichtleitern 13, 14 die Mikrostrukturen 16 in den sich zugewandten Hauptflächen H, H' vorgesehen und jeweils durch Prägen eingebracht worden.

Alle Lichtleiter 13, 14 sind außerhalb des mikrostrukturierten Bereichs transparent, so dass ein großer Teil der Anzeigefläche 8 transparent verbleibt und beispielsweise die Durchsicht durch die Funktionsanzeige gewährleistet ist, um dem Betrachter B die Möglichkeit zu geben, durch die Funktionsanzeige hindurch andere Anzeigen oder den Straßenverlauf zu verfolgen. Dadurch ist beispielsweise die Platzierung der Funktionsanzeige 1 an einem Lenkrad, beispielsweise im Bereich zwischen Lenkradnabe und Lenkradkranz möglich, ohne die Sicht auf das Armaturenbrett zu beeinträchtigen. Bei senkrechter Projektion der mikrostrukturierten Bereiche aller Lichtleiter 13, 14 auf die Anzeigefläche 8 überlappen die projizierten und mikrostrukturierten Flächenanteile der einzelnen Lichtleiter 13, 14 nicht, um die Darstellungsqualität der Symbole nicht zu beeinträchtigen.

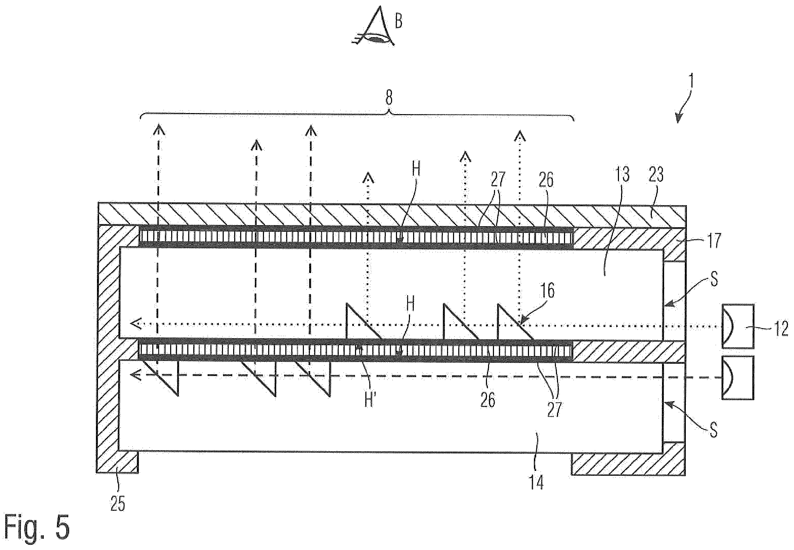

Figur 5 zeigt eine dritte Ausführungsform der erfindungsgemäßen Funktionsanzeige 1. Diese unterscheidet sich von ersten und zweiten Ausführungsform lediglich dadurch, dass die Lichtleiter 13, 14 hier durch einen Schichtaufbau aus den Schichten 26, 27 separiert sind aber auch die Deckschicht 23 durch einen Schichtaufbau aus den Schichten 26, 27 von dem nächstbenachbarten Lichtleiter 13 separiert ist. Der Schichtaufbau ergibt sich jeweils aus einer Beschichtung der jeweiligen Oberfläche von Deckschicht 23 bzw. Lichtleiter 13, 14 mit einem transparenten Material, welches einen Brechungsindex aufweist, der kleiner als der des Materials der Lichtleiter 13, 14 ist und einer zwischen diesen durch Beschichten ausgebildeten Schichten vorgesehenen Klebeschicht 26 aus einem transparenten Klebstoff, dessen Brechungsindex ebenfalls kleiner ist der der Lichtleiter 13, 14.

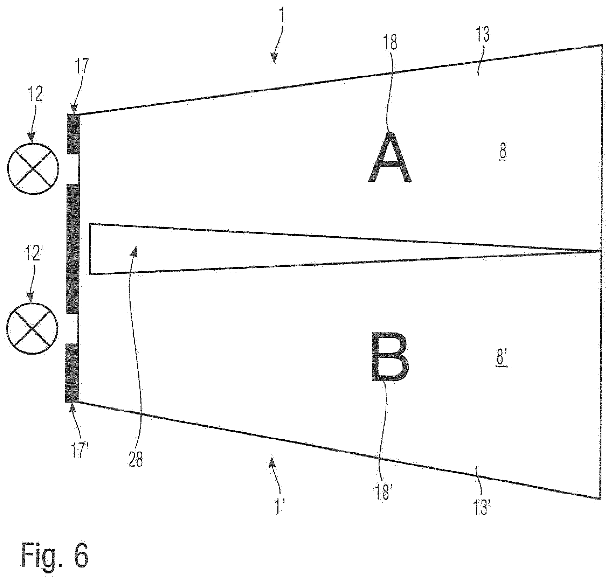

Figur 6 zeigt einen Schnitt durch eine erfindungsgemäße Anordnung aus mehreren Funktionsanzeigen 1, 1', die beispielsweise jeweils den Schnittaufbau, wie in den Figuren 1, 4 oder 5 gezeigt, aufweisen und aus Sicht des Betrachters nebeneinander angeordnet sind, um so nebeneinander angeordnete Anzeigeflächen auszubilden Die Anordnung zeichnet sich dadurch aus, dass zumindest ein Lichtleiter 13 der einen Funktionsanzeige 1 einstückig mit dem Lichtleiter 13' der anderen Funktionsanzeige 1' einstückig ausgebildet ist, um einen gemeinsamen Lichtleiter auszubilden. Die hier weiteren nicht gezeigten und darunter liegenden Lichtleiter sind mit entsprechend identischen Abmessungen ausgebildet. Es sollen aber auch Ausführungsformen erfindungsgemäß umfasst sein, bei denen die Lichtleiter pro Funktionsanzeige 1, 1' bezüglich ihrer Außenabmessungen unterschiedlich ausgebildet sind. Um die wechselseitige Lichteinstrahlung von einer Funktionsanzeige 1 in die andere Funktionsanzeige 1' und umgekehrt zu minimieren, ist ein keilförmiger Durchbruch 28 im gemeinsamen Lichtleiter 13, 13' ausgebildet, der mit einem Material verfüllt ist, welches einen Brechungsindex aufweist, der kleiner ist als der des Materials des gemeinsamen Lichtleiters 13, 13'.

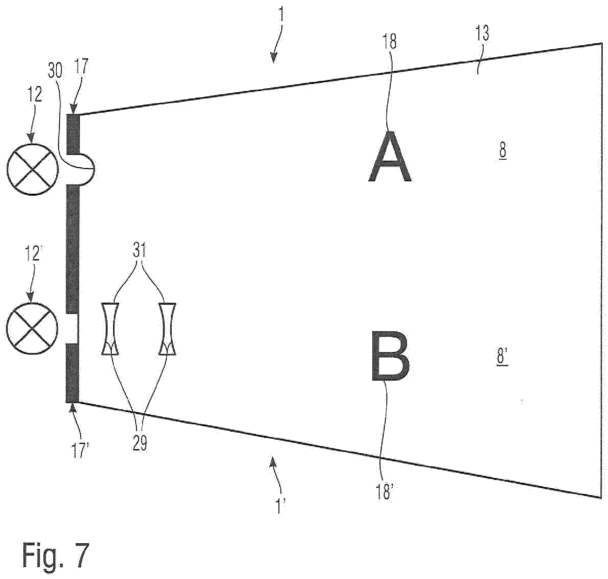

Figur 7 zeigt einen Schnitt durch eine weitere erfindungsgemäße Anordnung aus mehreren Funktionsanzeigen 1, 1', die beispielsweise jeweils den Schnittaufbau, wie in den Figuren 1, 4 oder 5 gezeigt, aufweisen und aus Sicht des Betrachters nebeneinander angeordnet sind, um so nebeneinander angeordnete Anzeigeflächen auszubilden Die Anordnung zeichnet sich ebenfalls dadurch aus, dass zumindest ein Lichtleiter 13 der einen Funktionsanzeige 1 einstückig mit dem Lichtleiter 13' der anderen Funktionsanzeige 1' einstückig ausgebildet ist, um einen gemeinsamen Lichtleiter auszubilden. Die hier weiteren nicht gezeigten und darunter liegenden Lichtleiter sind mit entsprechend identischen Abmessungen ausgebildet. Es sollen aber auch Ausführungsformen erfindungsgemäß umfasst sein, bei denen die Lichtleiter pro Funktionsanzeige 1, 1' bezüglich ihrer Außenabmessungen unterschiedlich ausgebildet sind. Um die wechselseitige Lichteinstrahlung von einer Funktionsanzeige 1 in die andere Funktionsanzeige 1' und umgekehrt zu minimieren, kann der Aus Figur 6 bekannte, keilförmige Durchbruch im gemeinsamen Lichtleiter 13, 13' ausgebildet sein, der mit einem Material verfüllt ist, welches einen Brechungsindex aufweist, der kleiner ist als der des Materials des gemeinsamen Lichtleiters 13, 13'. Bei der in Figur 7 gezeigten Ausführungsform wird auf diesen keilförmigen Durchbruch verzichtet. Bei der in Figur 7 gezeigten Ausführungsform bildet der jeweilige Lichtleiter im jeweiligen Lichtverlauf von der Lichtquelle 12, 12' zu dem zugehörigen Symbol 18, 18' jeweils gekrümmte Grenzflächen 29, 30 aus, um so optisch wirksame, bevorzugt fokussierende Linsenelement auszubilden. Beispielsweise ist im Lichtleiter 13 eine bezüglich des Lichtleiters konkave Eintrittsfläche 30 in der äußeren Stirnfläche des Lichtleiters 13 vorgesehen, wohingegen der Lichtleiter 13 mehrere Durchbrüche 31 aufweist, die mit einem Material gefüllt sind, welches einen Brechungsindex aufweist, der kleiner ist als der des Materials des gemeinsamen Lichtleiters 13, 13. Die durch die Durchbrüche 31 gebildeten Linsenelemente wirken ebenfalls fokussierend auf den Lichtverlauf von der Lichtquelle 12' zum zugehörigen Symbol 18'.

## Patentansprüche

1. Funktionsanzeige (1) zur selektiven Anzeige von Schaltfunktionen und/oder Schaltzuständen repräsentierenden Symbolen (18), insbesondere für ein Kraftfahrzeug, aufweisend:
eine äußere, transparente oder transluzente Deckschicht (23), welche eine Anzeigefläche (8) definiert;
einen Lichtleiterstapel aus mindestens zwei, in einer Stapelrichtung überlagert angeordneten, transparenten oder transluzenten, flächigen Lichtleitern (13, 14, 15), die durch mindestens eine transparente oder transluzente Schicht (24, 26, 27) aus einem im Vergleich zu den angrenzenden oder nächst benachbarten Lichtleitern optisch dünneren Material beabstandet zueinander angeordnet sind, so dass die Lichtleiter (13, 14, 15) jeweils eine einem Betrachter (B) zugewandte Hauptfläche (H) aufweisen und bei mindestens einem Lichtleiter (13, 14, 15) die dem Betrachter (B) abgewandte Hauptfläche (H') einem in der Stapelrichtung nächstbenachbarten Lichtleiter (13, 14, 15) zugewandt ist;
pro Lichtleiter (13, 14, 15) mindestens eine Lichtquelle (12), die angeordnet ist, Licht über eine Stirnfläche (S) des zugehörigen Lichtleiters (13, 14, 15) in den jeweiligen Lichtleiter (13, 14, 15) einzukoppeln;
wobei ferner pro Lichtleiter (13, 14, 15) eine im oder auf dem Lichtleiter (13, 14, 15) vorgesehene lichtbrechende und/oder lichtstreuende Mikrostrukturierung vorgesehen ist, welche ausgebildet ist, bei aktivierter Lichtquelle (12) ein hinterleuchtetes Symbol (18) für den Betrachter (B) sichtbar jeweils mittels des in den Lichtleiter (13, 14, 15) eingekoppelten Lichtes anzuzeigen, **dadurch gekennzeichnet,**
**dass** jeweils eine reflexionsmindernde Beschichtung (25) auf eine der Stirnfläche (S) gegenüberliegenden Stirnfläche der Lichtleiter (13, 14, 15) aufgebracht ist und dass bei senkrechter Projektion der mikrostrukturierten Bereiche aller Lichtleiter (13, 14, 15) auf die Anzeigefläche (8) die projizierten Flächenanteile nicht überlappen.

2. Funktionsanzeige (1) gemäß Anspruch 1, wobei die Mikrostrukturierung aus mehreren, gleichförmig ausgebildeten Mikrostrukturen (16) ausgebildet ist und deren senkrechte Projektion auf die Anzeigefläche (8) einen mikrostrukturierten Bereich für jeden Lichtleiter (13, 14, 15) definiert.

3. Funktionsanzeige (1) gemäß dem vorhergehenden Anspruch, wobei die Anzahldichte der Mikrostrukturen (16) im mikrostrukturierten Bereich 1.000 bis 2.000 pro mm² beträgt.

4. Funktionsanzeige (1) gemäß einem der beiden vorhergehenden Ansprüche, wobei die Mikrostrukturen (16) jeweils einen Durchmesser aufweisen, der im Bereich von 1 bis 25 µm liegt.

5. Funktionsanzeige (1) gemäß einem der vorhergehenden Ansprüche, wobei die wenigstens eine transparente oder transluzente, zwischen den Lichtleitern (13, 14) angeordnete Schicht (24) aus dem im Vergleich zu den nächstbenachbarten Lichtleitern (13, 14) optisch dünneren Material ein Luftspalt ist.

6. Funktionsanzeige (1) gemäß einem der vorhergehenden Ansprüche, wobei die wenigstens eine transparente oder transluzente, zwischen den Lichtleitern (13, 14) angeordnete Schicht (26) aus dem im Vergleich zu den nächstbenachbarten Lichtleitern (13, 14) optisch dünneren Material eine Klebstoffschicht ist.

7. Funktionsanzeige (1) gemäß einem der vorhergehenden Ansprüche, wobei die wenigstens eine transparente oder transluzente, zwischen den Lichtleitern (13, 14) angeordnete Schicht (27) aus dem im Vergleich zu den nächstbenachbarten Lichtleitern (13, 14) optisch dünneren Material durch eine Beschichtung der Lichtleiter (13, 14) ausgebildet ist.

8. Funktionsanzeige (1) gemäß einem der vorhergehenden Ansprüche, wobei die Mikrostrukturierung durch Prägen einer der Hauptflächen (H, H') pro Lichtleiter (13, 14, 15) ausgebildet ist.

9. Funktionsanzeige (1) gemäß einem der vorhergehenden Ansprüche, wobei zwei unmittelbar benachbarter Lichtleiter (13, 14, 15) vorgesehen sind, deren Mikrostrukturierung ausschließlich auf den sich zugewandten Hauptflächen (H, H') vorgesehen ist.

10. Funktionsanzeige (1) gemäß einem der vorhergehenden Ansprüche, wobei bei senkrechter Projektion der mikrostrukturierten Bereiche jedes Lichtleiters (13, 14, 15) auf die Anzeigefläche (8), der Flächenanteil aller mikrostrukturierten Bereiche weniger als die Hälfte der Anzeigefläche (8) ausmacht.

11. Funktionsanzeige (1) gemäß einem der vorhergehenden Ansprüche, wobei bei senkrechter Projektion der mikrostrukturierten Bereiche aller Lichtleiter (13, 14, 15) auf die Anzeigefläche (8) die projizierten Flächenanteile beabstandet zueinander angeordnet sind.

12. Funktionsanzeige (1) gemäß einem der vorhergehenden Ansprüche, wobei die Lichtleiter (13, 14, 15) jeweils durch eine Folie ausgebildet werden.

13. Funktionsanzeige (1) gemäß einem der vorhergehenden Ansprüche, wobei zwischen dem Lichtleiter (13, 14, 15) und der Lichtquelle (12) jeweils eine Linse und/oder eine Blende (17) angeordnet ist.

14. Funktionsanzeige (1) gemäß einem der vorhergehenden Ansprüche, wobei der Lichtleiter (13) im jeweiligen Lichtverlauf von der Lichtquelle (12) zu dem zugehörigen Symbol (18) jeweils mindestens eine gekrümmte Grenzfläche (29, 30) aufweist, um mindestens ein fokussierendes Linsenelement auszubilden.

15. Anordnung aus mehreren Funktionsanzeigen (1, 1'), die jeweils gemäß einem der vorhergehenden Ansprüche ausgebildet sind und aus Sicht des Betrachters (B) mehrere, nebeneinander angeordnete Anzeigeflächen (8, 8') ausbilden, und bei denen zumindest die Deckschicht (23) und/oder zumindest ein Lichtleiter (13, 13') einstückig ausgebildet ist.

16. Bedienelement (10), aufweisend eine Funktionsanzeige (1) gemäß einem der vorhergehenden Ansprüche 1 bis 14.

17. Bedienelement (10) gemäß dem vorhergehenden Anspruch, wobei die Anzeigefläche (8) einen transluzenten oder transparenten Teil einer Bedienfläche (9) eines für eine Berührung oder eine Betätigung bestimmten Bedienteils (2) des Bedienelements (10) ausbildet.

18. Lenkrad (20) für ein Kraftfahrzeug aufweisend eine Funktionsanzeige (1) gemäß einem der vorhergehenden Ansprüche 1 bis 14.

## Claims

1. Function display (1) for selectively displaying symbols (18) which represent switching functions and/or switching states, in particular for a motor vehicle, having:
an outer transparent or translucent cover layer (23), which defines a display area (8);
a light guide stack comprising at least two flat transparent or translucent light guides (13, 14, 15) which lie one over the other in a stacking direction and are spaced apart from one another by at least one transparent or translucent layer (24, 26, 27) of an optically thinner material in comparison with the adjacent or closest neighbouring light guides, such that each of the light guides (13, 14, 15) has a main surface (H) facing a viewer (B) and, in the case of at least one light guide (13, 14, 15), the main surface (H') facing away from the viewer (B) faces the closest neighbouring light guide (13, 14, 15) in the stacking direction;
at least one light source (12) for each light guide (13, 14, 15), said light source being arranged to couple light into the respective light guide (13, 14, 15) via an end face (S) of the corresponding light guide (13, 14, 15);
wherein a light-refracting and/or light-scattering microstructure is also provided for each light guide (13, 14, 15), said structure being provided in or on the light guide (13, 14, 15) and designed to display a backlit symbol (18) visibly for the viewer (B) when the light source (12) is activated, in each case by means of the light coupled into the light guide (13, 14, 15), **characterized**
**in that** applied on an end face of the light guides (13, 14, 15) opposite from the end face (S) there is in each case a reflection-reducing coating (25) and in that when the microstructured regions of all the light guides (13, 14, 15) are projected perpendicularly onto the display area (8), the projected areal fractions do not overlap.

2. Function display (1) according to Claim 1, wherein the microstructuring is formed by multiple, uniformly formed microstructures (16) and the perpendicular projection thereof onto the display area (8) defines a microstructured region for each light guide (13, 14, 15).

3. Function display (1) according to the preceding claim, wherein the numerical density of the microstructures (16) in the microstructured region is 1000 to 2000 per mm².

4. Function display (1) according to one of the two preceding claims, wherein the microstructures (16) have in each case a diameter which lies in the range from 1 to 25 µm.

5. Function display (1) according to one of the preceding claims, wherein the at least one transparent or translucent layer (24) of the optically thinner material in comparison with the closest neighbouring light guides (13, 14) that lies between the light guides (13, 14) is an air gap.

6. Function display (1) according to one of the preceding claims, wherein the at least one transparent or translucent layer (26) of the optically thinner material in comparison with the closest neighbouring light guides (13, 14) that lies between the light guides (13, 14) is a layer of adhesive.

7. Function display (1) according to one of the preceding claims, wherein the at least one transparent or translucent layer (27) of the optically thinner material in comparison with the closest neighbouring light guides (13, 14) that lies between the light guides (13, 14) is formed by a coating of the light guides (13, 14).

8. Function display (1) according to one of the preceding claims, wherein the microstructure in is formed by embossing one of the main areas (H, H') for each light guide (13, 14, 15).

9. Function display (1) according to one of the preceding claims, wherein two directly neighbouring light guides (13, 14, 15) are provided, the microstructuring of which is provided exclusively on the mutually facing main areas (H, H').

10. Function display (1) according to one of the preceding claims, wherein, when the microstructured regions of each light guide (13, 14, 15) are projected perpendicularly onto display area (8), the areal fraction of all the microstructured regions makes up less than half the display area (8).

11. Function display (1) according to one of the preceding claims, wherein, when the microstructured regions of all the light guides (13, 14, 15) are projected perpendicularly onto the display area (8), the projected areal fractions are arranged spaced apart from one another.

12. Function display (1) according to one of the preceding claims, wherein the light guides (13, 14, 15) are formed in each case by a film.

13. Function display (1) according to one of the preceding claims, wherein arranged between the light guide (13, 14, 15) and the light source (12) there is in each case a lens and/or a diaphragm (17).

14. Function display (1) according to one of the preceding claims, wherein the light guide (13) has in the respective path of light from the light source (12) to the associated symbol (18) in each case at least one curved interface (29, 30), in order to form at least one focusing lens element.

15. Arrangement comprising multiple function displays (1, 1'), which are formed in each case according to one of the preceding claims and form from the viewpoint of the viewer (B) multiple display areas (8, 8') which are arranged next to one another and in the case of which at least one covering layer (23) and/or at least one light guide (13, 13') is integrally formed.

16. Operator control element (10), having a function display (1) according to one of the preceding Claims 1 to 14.

17. Operator control element (10) according to the preceding claim, wherein the display area (8) forms a translucent or transparent part of an operator control area (9) of an operator control part (2) of the operator control element (10) intended for touch or actuation.

18. Steering wheel (20) for a motor vehicle having a function display (1) according to one of the preceding Claims 1 to 14.

## Revendications

1. Afficheur de fonctions (1) pour l'affichage sélectif de symboles (18) représentant des fonctions de commutation et/ou des états de commutation, en particulier pour un véhicule automobile, comprenant :
une couche de recouvrement extérieure (23) transparente ou translucide qui définit une surface d'affichage (8) ;
un empilement de guides de lumière composé d'au moins deux guides de lumière (13, 14, 15) plats, transparents ou translucides, agencés en superposition dans une direction d'empilement, qui sont disposés à distance les uns des autres par au moins une couche transparente ou translucide (24, 26, 27) en un matériau optiquement plus mince en comparaison des guides de lumière adjacents ou immédiatement voisins, de manière que les guides de lumière (13, 14, 15) comprennent chacun une surface principale (H) tournée vers un observateur (B) et, dans au moins un guide de lumière (13, 14, 15), la surface principale (H') opposée à l'observateur (B) est tournée vers un guide de lumière (13, 14, 15) immédiatement adjacent dans la direction d'empilement ;
au moins une source de lumière (12) par guide de lumière (13, 14, 15), qui est agencée de manière à injecter la lumière dans le guide de lumière respectif (13, 14, 15) via une face d'extrémité (S) du guide de lumière (13, 14, 15) associé ;
une microstructuration réfractant la lumière et/ou diffusant la lumière étant en outre prévue par guide de lumière (13, 14, 15) dans ou sur le guide de lumière (13, 14, 15), laquelle est conçue de manière à, lorsque la source de lumière (12) est activée, afficher un symbole rétroéclairé (18) visible pour l'observateur (B), au moyen de la lumière injectée dans les guides de lumière (13, 14, 15), **caractérisé**
**en ce qu'**un revêtement (25) réduisant la réflexion est appliqué sur une surface d'extrémité des guides de lumière (13, 14, 15) opposée à la surface d'extrémité (S) et en ce que, lors d'une projection perpendiculaire des zones microstructurées de tous les guides de lumière (13, 14, 15) sur la surface d'affichage (8), les parties de surface projetées ne se chevauchent pas.

2. Afficheur de fonctions (1) selon la revendication 1, dans lequel la microstructuration est formée d'une pluralité de microstructures (16) de forme identique et dont la projection perpendiculaire sur la surface d'affichage (8) définit une zone microstructurée pour chaque guide de lumière (13, 14, 15).

3. Afficheur de fonctions (1) selon la revendication précédente, dans lequel la densité de microstructures (16) dans la zone microstructurée se situe dans la plage de 1 000 à 2 000 par mm².

4. Afficheur de fonctions (1) selon l'une des deux revendications précédentes, dans lequel les microstructures (16) ont chacune un diamètre de 1 à 25 µm.

5. Afficheur de fonctions (1) selon l'une des revendications précédentes, dans lequel ladite au moins une couche (24) transparente ou translucide, agencée entre les guides de lumière (13, 14), constituée du matériau optiquement plus mince en comparaison des guides de lumière (13, 14) immédiatement adjacents, est un espace d'air.

6. Afficheur de fonctions (1) selon l'une des revendications précédentes, dans lequel ladite au moins une couche (26) transparente ou translucide, agencée entre les guides de lumière (13, 14), constituée du matériau optiquement plus mince en comparaison des guides de lumière (13, 14) immédiatement adjacents, est une couche d'adhésif.

7. Afficheur de fonctions (1) selon l'une des revendications précédentes, dans lequel ladite au moins une couche (27) transparente ou translucide agencée entre les guides de lumière (13, 14), constituée du matériau optiquement plus mince en comparaison des guides de lumière (13, 14) immédiatement adjacents, est formée par un revêtement des guides de lumière (13, 14).

8. Afficheur de fonctions (1) selon l'une des revendications précédentes, dans lequel la microstructuration est réalisée par gaufrage de l'une des surfaces principales (H, H') par guide de lumière (13, 14, 15).

9. Afficheur de fonctions (1) selon l'une des revendications précédentes, dans lequel deux guides de lumière (13, 14, 15) immédiatement adjacents sont prévus, dont la microstructuration est réalisée exclusivement sur les surfaces principales (H, H') tournées l'une vers l'autre.

10. Afficheur de fonctions (1) selon l'une des revendications précédentes, dans lequel, lors d'une projection perpendiculaire des zones microstructurées de chaque guide de lumière (13, 14, 15) sur la surface d'affichage (8), la proportion de surface de toutes les zones microstructurées est inférieure à la moitié de la surface d'affichage (8).

11. Afficheur de fonctions (1) selon l'une des revendications précédentes, dans lequel, lors d'une projection perpendiculaire des zones microstructurées de tous les guides de lumière (13, 14, 15) sur la surface d'affichage (8), les parties de surface projetées sont disposées à distance les unes des autres.

12. Afficheur de fonctions (1) selon l'une des revendications précédentes, dans lequel les guides de lumière (13, 14, 15) sont chacun formés par un film.

13. Afficheur de fonctions (1) selon l'une des revendications précédentes, dans lequel une lentille et/ou un diaphragme (17) est agencé(e) entre le guide de lumière (13, 14, 15) et la source de lumière (12).

14. Afficheur de fonctions (1) selon l'une des revendications précédentes, dans lequel le guide de lumière (13) présente, dans le trajet de lumière respectif de la source de lumière (12) au symbole correspondant (18), chaque fois au moins une surface limite courbée (29, 30) afin de former au moins un élément formant lentille de focalisation.

15. Agencement comprenant plusieurs afficheurs de fonctions (1, 1') qui sont chacun réalisés selon l'une des revendications précédentes et qui, du point de vue de l'observateur (B), forment plusieurs surfaces d'affichage (8, 8') agencées les unes à côté des autres, et dans lesquels au moins la couche de recouvrement (23) et/ou au moins un guide de lumière (13, 13') est réalisé(e) d'une seule pièce.

16. Élément de commande (10) comprenant un afficheur de fonctions (1) selon l'une des revendications 1 à 14 précédentes.

17. Élément de commande (10) selon la revendication précédente, dans lequel la surface d'affichage (8) forme une partie translucide ou transparente d'une surface de commande (9) d'une partie de commande (2) destinée à être touchée ou actionnée de l'élément de commande (10).

18. Volant (20) pour un véhicule automobile comprenant un afficheur de fonctions (1) selon l'une des revendications précédentes 1 à 14.
